(19) Europäisches Patentamt

European Patent Office

Office européen des brevets

(11) Veröffentlichungsnummer: **0 275 814**
**B1**

(12) **EUROPÄISCHE PATENTSCHRIFT**

(45) Veröffentlichungstag der Patentschrift:
05.09.90

(21) Anmeldenummer: 87730119.2

(22) Anmeldetag: 06.10.87

(51) Int. Cl.⁵: **C22B 3/00, C22B 3/20,**
**C22B 7/04, C22B 21/00**

(54) **Verfahren zur gleichzeitigen Kristallisation von Natriumchlorid und Kaliumchlorid.**

(30) Priorität: 16.12.86 DE 3643410

(43) Veröffentlichungstag der Anmeldung:
27.07.88 Patentblatt 88/30

(45) Bekanntmachung des Hinweises auf die Patenterteilung:
05.09.90 Patentblatt 90/36

(84) Benannte Vertragsstaaten:
DE FR GB IT

(56) Entgegenhaltungen:
DE-A- 2 713 281
DE-A- 2 746 860
DE-A- 2 747 078
DE-A- 2 815 354
DE-A- 2 825 806
DE-A- 3 043 916
DE-A- 3 137 950
DE-A- 3 200 347
DE-A- 3 413 366
FR-A- 886 687
US-A- 3 955 969
US-A- 4 050 999
US-A- 4 073 644

SCHRIFTENREIHE DER GESELLSCHAFT DEUTSCHER
METALLHÜTTEN UND BERGLEUTE, Nr. 47, 1986,

(73) Patentinhaber: MANNESMANN Aktiengesellschaft,
Mannesmannufer 2, D-4000 Düsseldorf 1(DE)

(72) Erfinder: Hofmann, Günter, Dipl.-Ing., Akazienhof 15,
D-4100 Duisburg 1(DE)

(74) Vertreter: Presting, Hans-Joachim, Dipl.-Ing. et al,
Meissner & Meissner Patentanwaltsbüro
Herbertstrasse 22, D-1000 Berlin 33(DE)

(56) Entgegenhaltungen: (Fortsetzung)
Seiten 101-116; G. WARGALLA: "Salzschlacken aus
Aluminium-Umschmelzanlagen"

## Beschreibung

Die Erfindung betrifft ein Verfahren zur gleichzeitigen Kristallisation von Natriumchlorid und Kaliumchlorid aus einer diese Komponenten als Hauptbestandteile enthaltenden wässrigen Lösung, wobei die für die Kristallisation erforderliche Verdampfungswärme über Röhrenwärmetauscherflächen eingebracht wird. Derartige Lösungen fallen insbesondere bei der Aufarbeitung von Umschmelzschlacken in der Sekundär-Aluminium-Industrie an.

Aus der DE-OS 31 37 950 ist ein Verfahren zum Entsalzen von Umschmelzschlacken aus der Sekundär-Aluminium-Industrie bekannt, bei dem nach einer Aufarbeitung der Schlacke durch Brechen und Zerkleinern in mehreren aufeinanderfolgenden Stufen und Abtrennen des metallischen Aluminiums durch Sieben ein Laugen der wasserlöslichen Anteile mit Wasser, eine Filtration und ein abschließendes Eindampfen vorgenommen werden. Über die Ausführung der Eindampfung ist dort nichts Näheres angegeben.

Ein weiteres Verfahren, welches aus der DE-OS 34 13 366 bekannt ist, beschreibt die Aufarbeitung einer aus der Aluminium-Produktion anfallenden Salzschlacke, die gemahlen und vom metallischen Aluminium befreit ist, durch Suspendieren in einer auf 90 - 115 °C erwärmten an Natriumchlorid und Kaliumchlorid bei Raumtemperatur gesättigten Lösung bis aus der zugesetzten Salzschlacke keine Gase mehr entweichen. Anschließend werden deponiefähige Feststoffe auf einer Kammerfilterpresse von der wässrigen Phase abgetrennt, und die Lösung wird zur Kristallisation von Kaliumchlorid gekühlt. In diesem Verfahren wird nur das Kaliumchlorid kristallisiert.

Die DE-OS 28 25 806 und die DE-OS 28 15 354 beschreiben ein Verfahren, das vorsieht, die vorzerkleinerten Aluminium-Salzschlacken in Trommeln zu laugen, die Suspension einzudicken und die aus dem Eindicker abgezogene Klarlauge einer Vakuumkristallisationsanlage zuzuführen. Über die Ausführung der Vakuumkristallisationsanlage ist nichts Näheres ausgeführt.

Ferner ist es aus der DE-OS 30 43 916 zur Rückgewinnung des Abdecksalzes aus den bei der Alt-Aluminiumverhüttung anfallenden Salzschlacken bekannt, diese Schlacken in Wasser zu lösen, die Lösung vom Ungelösten abzutrennen und als Waschflüssigkeit für die Ofenabgase zu verwenden, wobei die Lösung zu einer Kristallmaische eingeengt wird. Das abgetrennte Salz wird wieder als Abdecksalz eingesetzt. Hier wird die Kristallisationsstufe mit Abgasen direkt beheizt, der Wärmeaustausch erfolgt also ohne Wärmeaustauscherflächen.

Aus der US-PS 40 73 644 geht ein Verfahren hervor, in dem die Salzschlacke zunächst von der Aluminium-Schmelze abgetrennt und abgekühlt wird, um sie danach unter einem zusätzlichen Abdecksalz aus Alkali- und/oder Erdalkalichloriden auf eine Temperatur oberhalb des Schmelzpunktes von Aluminium zu erhitzen. Das flüssige Aluminium wird abgetrennt und verarbeitet, während die Mischung as Salzschlacke, restlichem Aluminium und zusätzlichem Abdecksalz so gekühlt wird, daß sie während des Abkühlens in Partikel von etwa 1,3 mm Dicke und etwa 5 - 7,5 mm Durchmesser zerfällt. Das Produkt wird warm gelaugt. Aus der Suspension werden, vorzugsweise in mehreren Stufen, durch Siebung Fraktionen von Partikeln unterschiedlicher Größe abgetrennt. Die von festen Bestandteilen befreite Lösung wird zu einer Maische von kristallinem Salz in hochkonzentrierter Lauge eingedickt, das Salz getrennt und nach der Trocknung dem frischen Abdecksalz zugemischt. Ein Trommel-Rotationsverdampfer mit Direktfeuerung wird als Kristallisator benutzt. Dieser Typ gestattet nicht die Wiederbenutzung der latenten Wärme der austretenden Brüden für die Verdampfung.

Die DE-OS 27 46 860 und DE-OS 27 47 078 beschreiben ein Verfahren, das dem bereits erwähnten Verfahren gemäß DE-OS 28 15 354 und DE-OS 28 25 806 ähnelt. Die resultierende Salzlösung wird dabei in einen Verdampfungsprozeß eingeleitet. Die Verdampfungseinrichtung ist im Ausführungsbeispiel als dreistufige Verdampfungskristallisationsanlage beschrieben.

Schließlich ist aus der "Schriftenreihe der Gesellschaft Deutscher Metallhütten- und Bergleute" (47 (1986) Seite 101 - 116: Salzschlacken aus Aluminium-Umschmelzanlagen) ein Verfahren zur Aufarbeitung von Aluminium-Salzschlacke bekannt, bei dem die Salzschlacke stufenweise gebrochen, geschülpt und gesiebt wird. Die vom Aluminiummetall abgereicherte Feinfraktion wird bei erhöhter Temperatur mit Wasser gelaugt. Es entsteht eine Hauptgasentbindung. Nach diesem Ausgasen wird die Suspension eingedickt und nahezu gesättigte Salzsole gewonnen. Aus dieser Sole wird in einer mehrstufigen Vakuum-Kristallisationsanlage direkt das Salzgemisch NaCl/KCl kristallisiert.

Die gemeinsame Kristallisation der üblicherweise in diesen Lösungen enthaltenen Salze Kaliumchlorid und Natriumchlorid ist wegen einer Besonderheit des Phasensystems NaCl-KCl-$H_2O$ nicht unproblematisch. Diese Besonderheit ist in der Erzeugung von Natriumchloridübersättigungen beim Aufheizen von Suspensionen zu sehen, wenn diese sowohl Natriumchlorid- als auch Kaliumchloridkristalle enthalten.

Da die gemeinsame Kristallisation von Natriumchlorid und Kaliumchlorid nur durch den Lösungsmittelentzug, d.h. durch Verdampfungskristallisation möglich ist, sind für die Kristallisation in den Kristallisatoren Aufheizungen vorzunehmen. Die erforderlichen wärmeübertragenden Flächen können daher direkt Natriumchloridübersättigungen ausgesetzt sein.

Überschreitungen des metastabilen Bereiches, d.h. Spontankeimbildung und feines Produktkristallisat, welches sicn nur schwer abtrennen läßt, und vor allem die Verkrustung der wärmeübertragenden Flächen in kürzeren Zeiten als für die jeweilige Einzelsubstanz-Kristallisation sind die unmittelbare Folge. Zur Lösung dieses Problems wird in der US-PS 40 73 644 ein Rotationsverdampfer vorgeschlagen, der Nachteile durch Verkrustungen nicht aufweist. Der Einsatz dieses Verdampfertyps bedingt jedoch einen hohen Energieverbrauch.

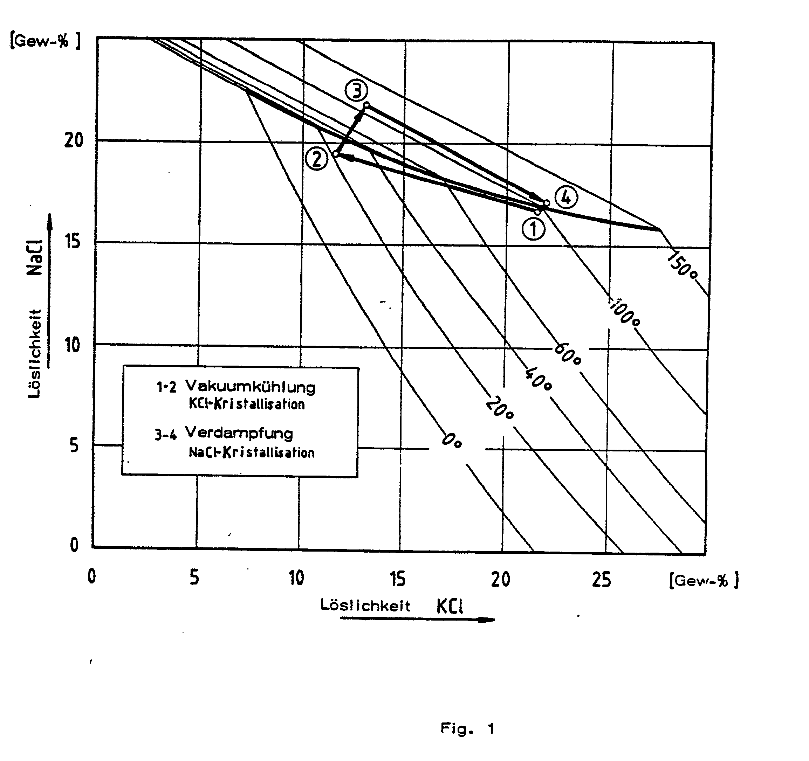

Eine andere Lösung des Verkrustungsproblems ist die separate Kristallisation des Natriumchlorid und des Kaliumchlorid. Diese ist technisch unproblematisch und über einen Kreisprozeß, wie er in Figur 1 dargestellt ist, ohne weiteres durchführbar. Ausgehend vom Punkt 1 wird durch Vakuumkühlung Kaliumcnlorid auskristallisiert. Am Punkt 2 setzt die Erwärmung der Lösung ein, wodurch der Lösung Wasser entzogen wird. Von Punkt 3 bis Punkt 4 erfolgt auf gleichbleibendem Temperaturniveau die Verdampfungskristallisation für Natriumchlorid. Durch Wasserzugabe gelangt man vom Punkt 4 wieder zum Ausgangspunkt 1.

Diese Art der separaten Kristallisation ist aufwendig und unwirtschaftlich im Hinblick darauf, daß eine Trennung der Salze für ihre Wiederverwendung in der Aluminium-Industrie völlig unnötig ist.

Aufgabe der Erfindung ist es daher, ein Verfahren anzugeben, welches die Kristallisation des Salzgemisches Natriumchlorid und Kaliumchlorid ohne die Nachteile von zu feinem Kristallisat und starker Neigung zu Verkrustungen gestattet und mit möglichst wenig Aufwand zu betreiben ist.

Diese Aufgabe wird erfindungsgemäß dadurch gelöst, daß die z.B. aus der Aluminium-Salzschlacken-Aufbereitung durch Laugung und Nachbehandlung gewonnene Lösung mit den beiden gelösten Hauptbestandteilen Natriumchlorid und Kaliumchlorid einer Verdampfungskristallisation bei Lösungstemperaturen von oberhalb 90 °C unterzogen wird. Vorzugsweise wird in einem Temperaturbereich von mindestens 100 °C gearbeitet. Wegen des oberhalb 100 °C relativ schnell zunehmenden Arbeitsdruckes und den damit verbundenen Nachteilen für die Produktentnahme wird vorzugsweise einstufig gearbeitet. Es ist jedoch auch eine mehrstufige Verdampfungskristallisation durchführbar. Wesentlich ist, daß die Verdampfungskristallisation in allen Stufen oberhalb von 90 °C, vorzugsweise bei etwa 100 °C durchgeführt wird. Im Hinblick auf einen möglichst sparsamen Energieeinsatz ist es zweckmäßig, bei einstufiger Verdampfungskristallisation eine Brüdenkompression vorzusehen. Im allgemeinen wird eine mechanische Brüdenkompression bevorzugt. Insbesondere im kleinen Leistungsbereich kann jedoch auch eine Dampfstrahl-Brüdenkompression vorteilhaft sein.

Durch die erfindungsgemäße Temperaturführung wird die Ausbildung von Natriumchlorid-Übersättigungen auf den Wärmeaustauschflächen je nach Temperatur nahezu oder vollständig unterbunden; es können sogar leichte Natriumchlorid-Untersättigungen eintreten. Der Neigung zu Verkrustungen wird dadurch entgegengewirkt. Diese Feststellung ist auch für den Fachmann überraschend, da aus dem Phasensystem NaCl-KCl-H$_2$O (Figur 1) unmittelbar entnommen werden kann, daß es bei Aufheizung von Suspensionen, die sowohl Natriumchlorid- als auch Kaliumchloridkristalle enthalten, zu einer Absenkung der Natriumchlorid-Konzentration bei gleichzeitigem Anstieg der Kaliumchlorid-Konzentration kommt.

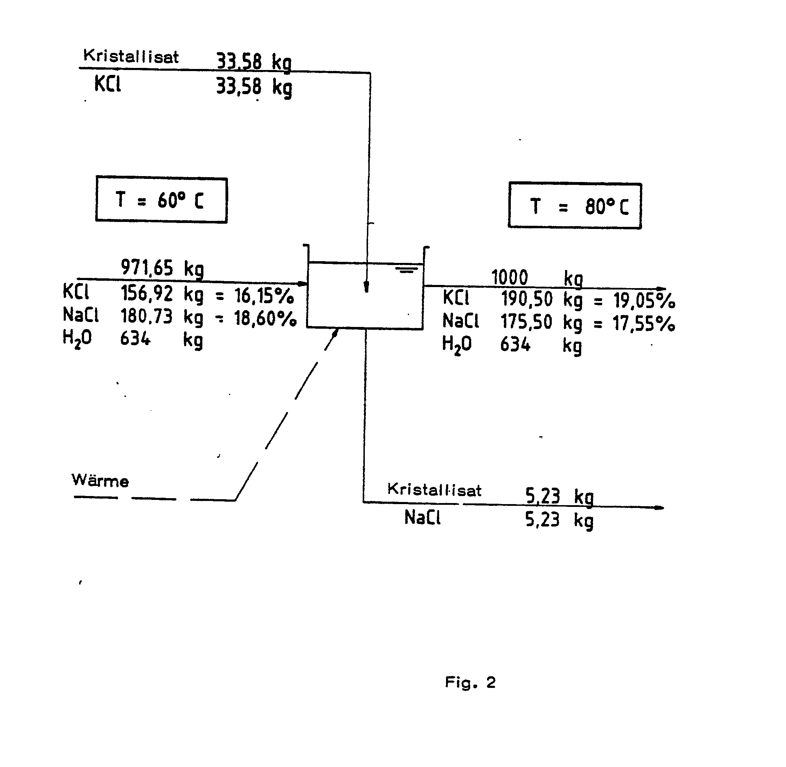

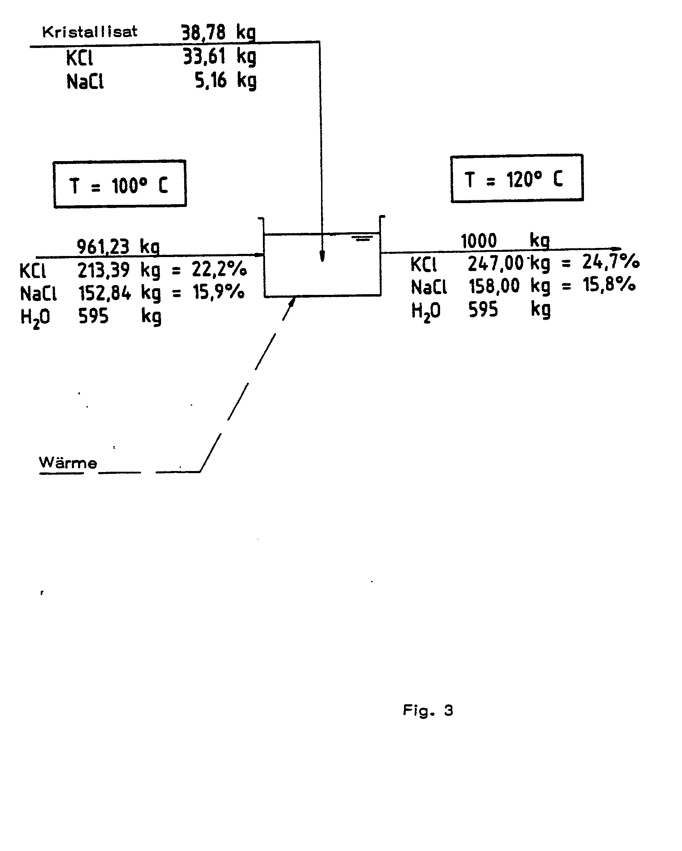

Erst der Vergleich verschiedener Massenbilanzen (Figur 2 und 3) zeigt, daß dieser Konzentrationsrückgang nicht auch unbedingt mit der Erzeugung von NaCl-Übersättigungen verbunden ist. Aus Figur 2 ist zu ersehen, daß sich beim Aufheizen einer bei 60 °C an Kaliumchlorid und Natriumchlorid gesättigten Lösung auf 80 °C nur Kaliumchlorid auflöst und dabei Natriumchlorid übersättigt wird, so daß letztlich pro 1000 kg Lösung 5,23 kg Natriumchlorid kristallisieren. Demnach wird in diesem Beispiel zunächst eine Übersättigung von 5,23 g Natriumchlorid pro kg Lösung produziert.

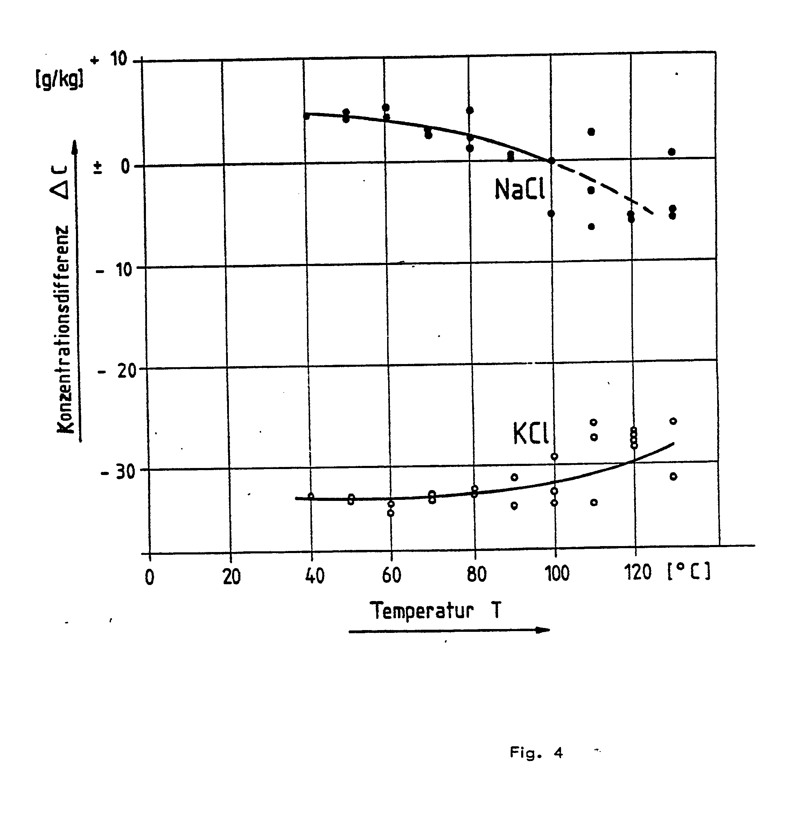

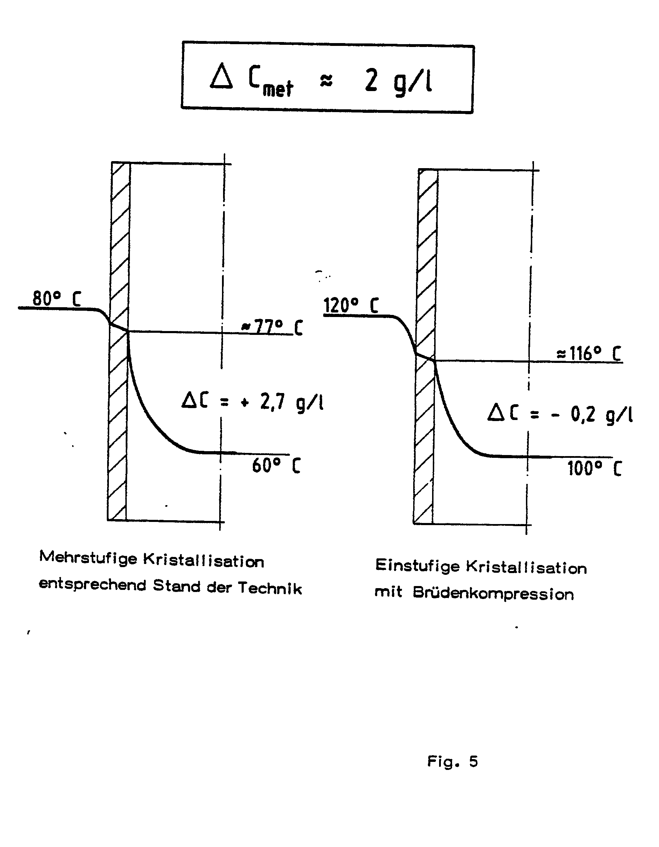

Figur 3 zeigt dagegen den umgekehrten Fall, daß bei der Aufheizung einer bei 100 °C an Natriumchlorid und Kaliumchlorid gesättigten Lösung auf 120 °C sowohl Kaliumchlorid als auch Natriumchlorid aus der beide Kristallisate enthaltenden Suspension nachgelöst werden. Insgesamt entstehen trotz des Rückgangs der Natriumchlorid-Sättigungskonzentration von 15,9 auf 15,8 Gewichts-% in diesem Beispiel 5,16 g/kg Natriumchlorid-Untersättigung. Errechnet man auf diesem Wege die sich bei Aufheizung um 20 °C ergebenden Konzentrationsdifferenzen mit allen aus der Literatur bekannten Wertepaaren für die Polythermenkonzentrationen, so zeigt sich (Figur 4), daß etwa bei einer Lösungstemperatur von 100 °C die Konzentrationsdifferenz für Natriumchlorid 0 und bei höheren Temperaturen sogar negativ wird. Aus Figur 5 geht hervor, warum dieser überraschende Zusammenhang für die Kristallisation des Salzgemisches Natriumchlorid/Kaliumchlorid von Bedeutung ist. Bei einer typischen Stufe einer mehrstufigen Verdampfungskristallisation, die beispielsweise bei 60 °C Lösungstemperatur betrieben und mit Brüden von 80 °C beheizt wird, stellt sich in dem üblicherweise als Rohrbündel ausgeführten Heizkörper eine Rohrwandtemperatur von etwa 77 °C ein. Dadurch kommt es direkt am Rohr zu einer Aufheizung der bei 60 °C an Natriumchlorid und Kaliumchlorid gesättigten Lösung auf diese Temperatur von 77 °C. Infolgedessen wird die an der Rohrwand aufgeheizte Lösung um 2,7 g/l mit Natriumchlorid übersättigt.

Da der metastabile Bereich für Natriumchlorid bei nur 2 g/l liegt, wird es an bestimmten Punkten der Wand zur Keimbildung und zwangsläufig zur Verkrustung mit Natriumchlorid kommen. Da desweiteren die Lösung bei Durchlaufen des Wärmeaustauschers um einen Betrag von rd. 0,5 - 5 K aufgeheizt wird und sich dabei noch zusätzlich übersättigt, finden diese einmal gebildeten Wandverkrustungen im Normalbetrieb gute Wachstumsbedingungen, was durch die hohen Strömungsgeschwindigkeiten in den Rohren und das diffusionsbestimmte Kristallwachstum des Natriumchlorid außerdem begünstigt wird. Aus diesem Grund verkrusten mehrstufige Anlagen, wie sie aus dem Stand der Technik bekannt sind, in kurzen Zeitabständen. Es werden außerdem sehr feine, schlecht trennfähige Kristallisate erhalten, da es in diesen Systemen für das Natriumchlorid-Kristallisat keine Möglichkeit zur Feinkristallisatauflösung gibt. Die Kristallisation von Natriumchlorid zu gut trennfähigem Produktkristallisat wird sonst gerade durch die im Wärmetauscher gebildeten Auflösekapazitäten unterstützt, da hierbei die feinsten Kristallisate verstärkt gelöst werden.

Bei einer Lösungstemperatur um 100 °C oder darüber wird sich dagegen keine Übersättigung an Natriumchlorid, sondern eine leichte Untersättigung an Natriumchlorid einstellen. Verkrustungen durch den bei den tieferen Temperaturen eintretenden Übersättigungsmechanismus können in diesem Fall nicht eintreten. Feinkristallauflösungen und damit eine deutliche Verbesserung der Körnung und Abtrennbarkeit des Produktkristallisates sind möglich.

Die Vorteile des Verfahrens liegen somit in der Erzielung von langen verkrustungsfreien Betriebsperioden, wie sie für industrielle Massenkristallisationsprozesse in anderen Anwendungen seit langem üblich sind und in der Erzielung gut trennfähiger Produktkristallisate. Außerdem ergeben sich erhebliche Kosteneinsparungen bei Erstellung und Betrieb der erforderlichen Anlagen.

**Patentansprüche**

1. Verfahren zur gleichzeitigen Kristallisation von Natriumchlorid und Kaliumchlorid aus einer diese Komponenten als Hauptbestandteile enthaltenden wässrigen Lösung, insbesondere einer Lösung, die bei der Aufarbeitung von Umschmelzschlacken in der Sekundär-Aluminium-Industrie entstanden ist, wobei die für die Kristallisation erforderliche Verdampfungswärme über Röhrenwärmetauscherflächen eingebracht wird,
dadurch gekennzeichnet,
daß die Verdampfungskristallisation ein oder mehrstufig vollständig bei einer Temperatur der Lösung von über 90°C vorgenommen wird.

2. Verfahren nach Anspruch 1,
dadurch gekennzeichnet,
daß die einstufige Kristallisation bei einer Temperatur von mindestens 100°C vorgenommen wird.

3. Verfahren nach Anspruch 1 oder 2,
dadurch gekennzeichnet,
daß die einstufige Kristallisation mit einer Brüdenkompression, insbesondere einer mechanischen Brüdenkompression betrieben wird.

**Claims**

1. A process for the simultaneous crystallisation of sodium chloride and potassium chloride from an aqueous solution containing these components as main constituents, in particular a solution which has been produced during working-up of re-meltin slags in the secondary aluminium industry, with the heat of evaporation which is necessary for the crystallisation being introduced by shell-and-tube heat exchanger surfaces,
characterised in that
the crystallisation by evaporation is carried out in one or several stages completely at a temperature of the solution of above 90°C.

2. Process according to Claim 1, characterised in that the one-stage crystallisation is carried out at a temperature of at least 100°C.

3. Process according to Claim 1 or 2,
characterised in that
the one-stage crystallisation is operated with vapour compression, in particular mechanical vapour compression.

**Revendications**

1. Procédé pour la cristallisation simultanée de chlorure de sodium et de chlorure de potassium à partir d'une solution aqueuse contenant ces composants comme parties constitutives principales, en particulier une solution qui est produite lors du retraitement de scories de refusion dans l'industrie de l'aluminium secondaire, la chaleur d'évaporation nécessaire pour la cristallisation étant amenée par des surfaces d'échange thermique tubulaires,
caractérisé en ce que la cristallisation par évaporation complète en un ou plusieurs étages est effectuée à une température de la solution supérieure à 90°C.

2. Procédé selon la revendication 1,
caractérisé en ce que la cristallisation à un étage est effectuée à une température d'au moins 100°C.

3. Procédé selon la revendication 1 ou 2,
caractérisé en ce que la cristallisation à un étage est mise en oeuvre avec une compression à buée, en particulier une compression à buée mécanique.

Fig. 1

Kristallisat    33,58 kg
KCl         33,58 kg

$T = 60° C$

$T = 80° C$

971,65 kg
KCl    156,92 kg = 16,15%
NaCl   180,73 kg = 18,60%
$H_2O$    634    kg

1000    kg
KCl    190,50 kg = 19,05%
NaCl   175,50 kg = 17,55%
$H_2O$    634    kg

Wärme

Kristallisat    5,23 kg
NaCl        5,23 kg

Fig. 2

| Kristallisat | 38,78 | kg |
|---|---|---|
| KCl | 33,61 | kg |
| NaCl | 5,16 | kg |

T = 100° C

T = 120° C

| 961,23 | kg | |
|---|---|---|
| KCl | 213,39 kg | = 22,2% |
| NaCl | 152,84 kg | = 15,9% |
| $H_2O$ | 595 kg | |

| 1000 | kg | |
|---|---|---|
| KCl | 247,00 kg | = 24,7% |
| NaCl | 158,00 kg | = 15,8% |
| $H_2O$ | 595 kg | |

Wärme

Fig. 3

EP 0 275 814 B1

Fig. 4

$$\triangle \, C_{met} \;\; \approx \;\; 2 \; g/l$$

80° C

≈77° C

$\triangle C = + 2,7 \; g/l$

60° C

120° C

≈116° C

$\triangle C = - 0,2 \; g/l$

100° C

Mehrstufige Kristallisation
entsprechend Stand der Technik

Einstufige Kristallisation
mit Brüdenkompression

Fig. 5